# EUROPEAN PATENT APPLICATION

(11) **EP 2 413 487 A1**
(43) Date of publication of application: **01.02.2012**
(21) Application number: 09842201.7
(22) Date of filing: 23.03.2009
(51) Int. Cl.: H02M 7/48

(54) **POWER CONVERTER**

(71) Applicant: Toshiba Mitsubishi-Electric Industrial Systems Corporation, Minato-ku Tokyo 108-0073 (JP)
(72) Inventor: TATSUTA, Toshiki, Tokyo 108-0073 (JP)
(74) Representative: Zech, Stefan Markus
(86) International application number: PCT/JP2009/055708
(87) International publication number: WO 2010/109587

(57) **Abstract**

A power conversion apparatus, which is contained in a housing (8A) and capable of cooling an inverter (2) in a housing (8A) to a predetermined temperature by rotation operation of a plurality of cooling fans (26) in the housing (8A), the power conversion apparatus including malfunction detection means for detecting a current flowing through a drive circuit of an operating cooling fan (26) and outputting a malfunction detection signal when a detected current value thereof becomes lower than a reference value, a temperature detector (15) which detects a temperature inside the housing (8A), and an operation control apparatus (16) which continues operation of the inverter (2) without stopping the operation of the inverter (2) if the temperature detected by the temperature detector (15) is higher than a first determination temperature for a required setting lifetime for each of main components provided in the housing (8A) and is not higher than a second determination temperature as a maximum use-limit temperature for each of the main components provided in the housing (8A) and if there is a properly working cooling fan among the cooling fans (26).

## Description

### Technical Field

The present invention relates to a power conversion apparatus which is used in an uninterruptible power supply apparatus or a drive system, and includes a main circuit of a power converter and a control circuit for the power converter, the circuits being made of semiconductor devices inside a housing, and also includes a cooling fan for cooling the interior of the housing.

### Background Art

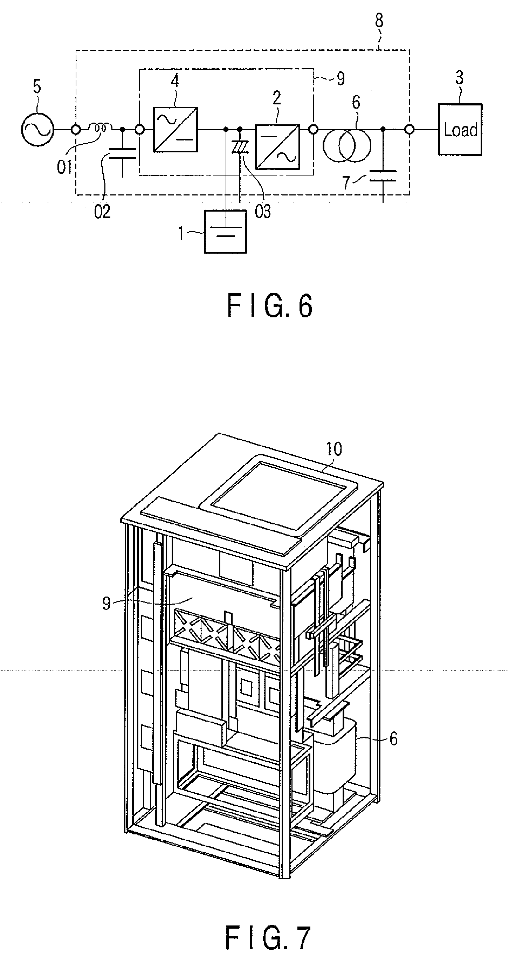

FIGS. 6 and 7 are diagrams for explaining an example of a conventional uninterruptible power supply apparatus. This apparatus includes: an inverter 2 which converts, as a power converter 9, a direct current power supplied from a direct current power supply 1 into a predetermined alternating current power and supplies an alternating current load 3 with an alternating current power; and a converter 4 which converts the alternating current power from an alternating current power supply 5 into a direct current power which is input to the inverter 2. Between the inverter 2 and the alternating current load 3, an inverter transformer 6 and a filter condenser 7 are connected. The filter condenser 7 constitutes a filter circuit which performs wave-shaping on an output of the inverter 2 and converts the output into an output which complies with requirements from the load 3. Between the alternating current power supply 5 and a converter 4, a reactor 01 and a condenser 02 are connected. Between the alternating current power supply 1 and the inverter 2, a smoothing condenser 03 is connected. All of these constitutive components are contained within one housing (on one board).

In the power conversion apparatus 8 described above, heat generators are the power converter 9 comprising the inverter 2 and converter 4, inverter transformer 6, reactor 01, condenser 02, and smoothing condenser 03.

A method for cooling these heat generators is a forced air-cooling scheme in which external air (wind) is made to flow into the power conversion apparatus 8 by a large-scale cooling fan 10. In a configuration of the present apparatus, a large-scale cooling fan 10 is arranged on a board. External air is taken in from under the board, and the wind is introduced by the large-scale cooling fan 10 above the board.

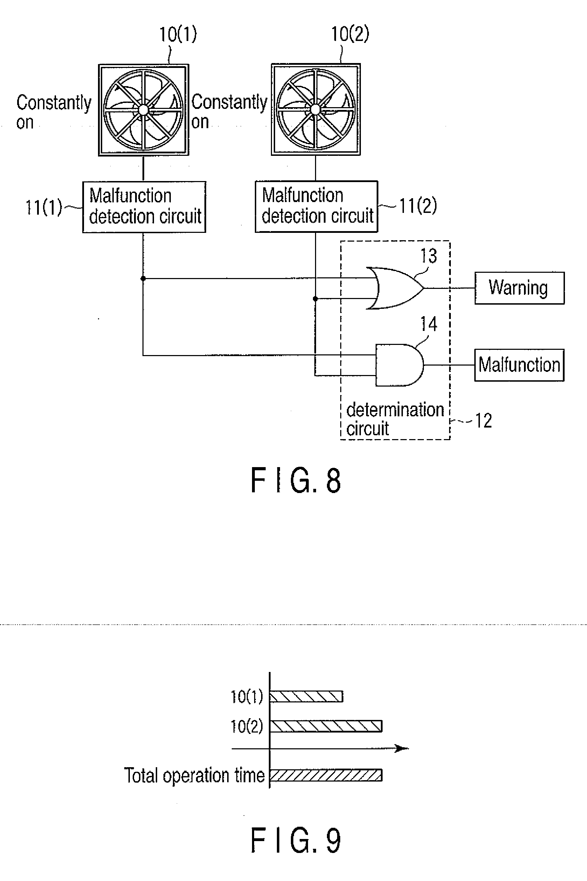

FIG. 8 is a diagram for explaining a schematic configuration of a cooling apparatus in a conventional power conversion apparatus. In this apparatus, two cooling fans 10(1) and 10(2) are prepared where each one cooling fan 10 can cool the power conversion apparatus 8. These cooling fans 10(1) and 10(2) are used, constantly rotated as shown in FIG. 9 in multiple layers, and cooling functions of the power conversion apparatus are thereby improved to achieve high reliability and a long lifetime of the apparatus.

Considering malfunctions of the cooling fans 10(1) and 10(2) within a lifetime of the power conversion apparatus 8, there are provided malfunction detection circuits 11(1) and 11(2) which respectively detect malfunctions of the cooling fans 10(1) and 10(2). There is also provided a determination circuit 12 for receiving an output from each of the malfunction detection circuits 11 and for outputting warning information and malfunction information to outside. The determination circuit 12 includes an OR circuit 13 and an AND circuit 14. Each of the malfunction detection circuits 11 is for detecting a malfunction by detecting that a rotation speed comes to be equal to or lower than a reference value.

In addition to the example described above as the background art, the following Patent Documents 1 and 2 are known as documents relating to cooling of a power conversion apparatus by use of a cooling fan. Of these documents, Patent Document 1 describes a feature that scattering of noise to outside can be suppressed by providing a cooling fan in an intermediate part between a plurality of semiconductor switch elements. In addition, a risk of shortening a lifetime can be avoided since the cooling fan and a motor thereof are not exposed to a high temperature. Further, a control circuit cooling fan can be omitted by using a part of air flow generated by the semiconductor-switch-element cooling fan to cool a control circuit. Patent Document 2 describes a power conversion apparatus capable of extending the lifetime of a motor and bearings of a cooling fan by controlling a rotation speed of the cooling fan in accordance with calorific power generated by a power conversion apparatus.
Patent Document 1: Jpn. Pat. Appln. KOKAI Publication No. 2004-364372
Patent Document 2: Jpn. Pat. Appln. KOKAI Publication No. 2001-16843

### Disclosure of Invention

### (Technical Problem)

In the cooling apparatus in the foregoing conventional power conversion apparatus described above, the cooling fans 10, which are mechanical components, have a lifetime which is as short as five years, in contrast to the power converter 9 which is an electrical component. Therefore, the cooling fans 10 need to be replaced within a designed apparatus lifetime even though the power conversion apparatus has a designed apparatus lifetime of ten years, for example.

In addition, regarding the cooling fans in the foregoing conventional power conversion apparatus, when a temperature inside a housing containing a body of the power conversion apparatus exceeds a reference value or when even only one of the plurality of cooling fans is detected to be malfunctioning, operation of the power conversion apparatus is stopped regardless of lifetimes of components which form part of the power conversion apparatus.

Meanwhile, there have been recent demands for a power conversion apparatus which can continue operating as long as possible by use of the remaining properly working fans even when a plurality of cooling fans malfunction or stop.

The invention has been made in view of the circumstances as described above. Accordingly, it is an object of the invention to provide a power conversion apparatus which can continue operating as long as possible by use of any remaining properly working fan even when one of a plurality of cooling fans malfunctions or stops.

### (Solution to Problem)

To achieve the object, according to the invention of claim 1, there is provided a power conversion apparatus, which is contained in a housing and includes a main circuit of a power converter made of a semiconductor device and a control circuit for the power converter, the power conversion apparatus being capable of cooling the power converter to a predetermined temperature by rotation operation of at least two cooling fans in the housing, the power conversion apparatus comprising: malfunction detection means for detecting a rotation speed of a rotating cooling fan among the cooling fans or a current flowing through a drive circuit of the rotating cooling fan, and outputs a malfunction detection signal when the detected current value becomes lower than a reference value; temperature detection means for detecting a temperature inside the housing; and an operation control apparatus which rotates at least one of the cooling fans capable of being operated to rotate, thereby to continue operation of the power converter without stopping the operation of the power converter, when the malfunction detection signal from the malfunction detection means is detected, a temperature of the semiconductor device forming the main circuit is within a specified value, and the detected temperature detected by the temperature detection means becomes higher than a first determination temperature for a required setting lifetime for each of main components provided in the housing.

### Brief Description of Drawings

FIG. 1 is a schematic diagram for explaining the first embodiment of a power conversion apparatus according to the invention;
FIG. 2 is a flowchart for explaining operation of an operation control apparatus shown in FIG. 1;
FIG. 3 is a graph showing a relationship between a lifetime of a component and a temperature, for explaining the operation shown in FIG. 2;
FIG. 4 is a table showing a relationship between a component and maximum use temperatures, for explaining the operation shown in FIG. 2;
FIG. 5 is a schematic diagram for explaining the second embodiment of a power conversion apparatus according to the invention;
FIG. 6 is a single-line diagram of a conventional power conversion apparatus;
FIG. 7 is a perspective view of the power conversion apparatus shown in FIG. 6;
FIG. 8 is a block diagram for explaining a cooling apparatus in the power conversion apparatus shown in FIG. 6; and
FIG. 9 is a time chart for explaining operation of the cooling apparatus shown in FIG. 8.

### Best Mode for Carrying Out the Invention

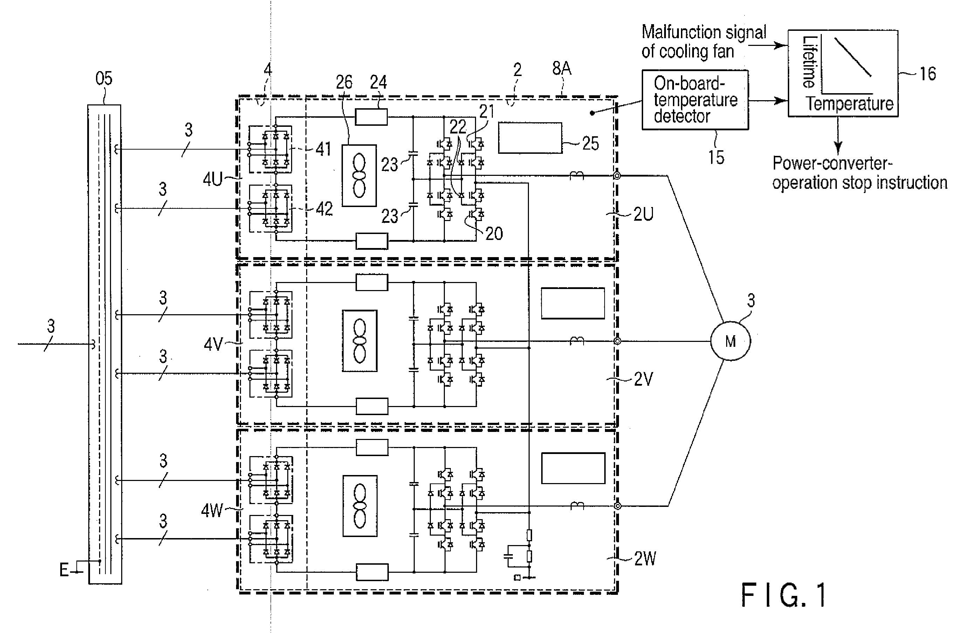

Hereinafter, embodiments of the invention will be described with reference to the drawings. FIG. 1 is a schematic diagram for explaining the first embodiment of a power conversion apparatus. The power conversion apparatus shown in this figure includes, contained in one housing 8A: a converter 4 including converter units 4U, 4V, and 4W having diode bridges 41 and 42 which drop and convert an alternating current voltage from a power system into a direct current voltage by a transformer 05; an inverter 2 including inverter units 2U, 2V, and 3W including device bridges 21 and 22, which convert the direct current voltage converted by the converter 4 into an alternating current voltage, the bridges each including a main circuit having a semiconductor device such as an IGBT and a diode connected in anti-parallel with the semiconductor device; smoothing condensers 23 connected in parallel with the device bridges 21 and 22; fuses 24 connected at contact points between the converter 4 and the inverter 2; boards 25 where components forming control circuits for controlling the main circuits of the inverter 2 are mounted; and a plurality of (three in this case) cooling fans 26. A power converter in the housing 8A can be cooled to a predetermined temperature by rotation operation of the cooling fans 26.

The power conversion apparatus further includes constitutive components described below. Specifically, the power conversion apparatus includes: a malfunction detection means (not shown) which detects a rotation speed of an operating cooling fan 26 among the cooling fans 26 and current flowing through a drive circuit of the operating cooling fan 26, and outputs a malfunction detection signal when a detected current value thereof drops under a reference value; an On-board-temperature detection means 15 for detects a temperature inside the housing 8A; and an operation control apparatus 16 which does not stop but continues operation of the power converter if a detection temperature detected by the On-board-temperature detection means 15 is higher than a first determination temperature for a required setting lifetime for each of main components provided in the housing 8A and is not higher than a second determination temperature as a maximum use-limit temperature for each of the main components provided in the housing 8A and if there is a properly working cooling fan among the cooling fans 26.

The operation control apparatus 16 includes a relay timer which counts elapsed time which is required until a malfunctioning cooling fan is replaced since the second determination temperature is reached.

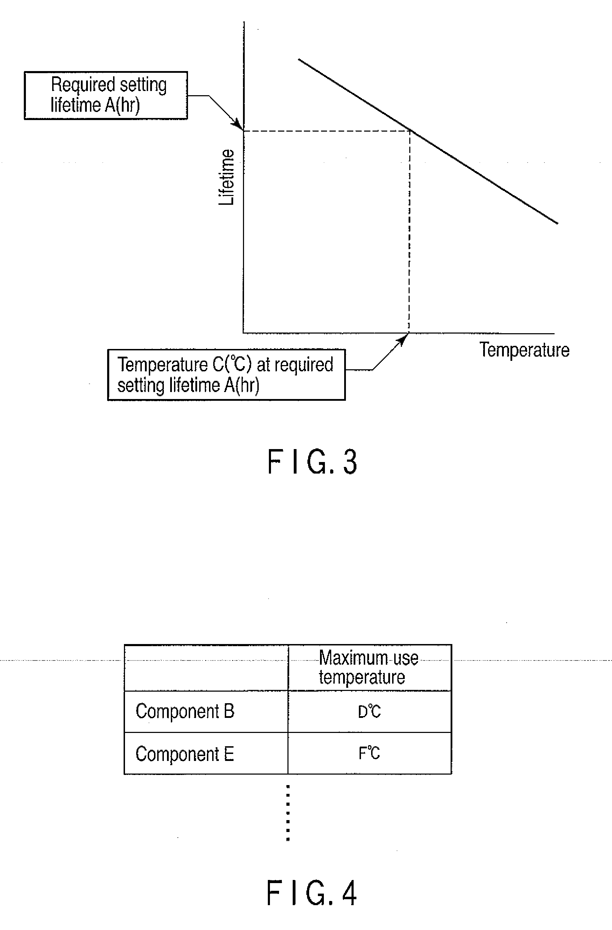

Further, the operation control apparatus 16 includes a memory table, not shown, which stores a relationship between, for example, the temperature inside the housing 8A detected by the On-board-temperature detection means 15 and, for example, the lifetime of the power converter, e.g., a relationship as shown in FIG. 3 or, namely, a relationship created on the basis of an ARENIUM method. Therefore, a required setting lifetime A (hr) represented along the vertical axis of FIG. 3, which is, for example, the lifetime of the power converter, can be obtained by inputting, for example, the temperature detected by the On-board-temperature detection means 15 as a temperature C at a required setting lifetime A (hr) represented along the horizontal axis in a logarithmic graph of FIG. 3.

The operation control apparatus 16 stores maximum use temperatures of components forming the power conversion apparatus, such as the semiconductor devices in the inverter units 2U, 2V, and 3W, the condensers in the inverter units 2U, 2V, and 3W, the fuses 24, the diodes in the converter units 41 and 42, and the boards, i.e., the table shown in FIG. 4 in the memory table described above.

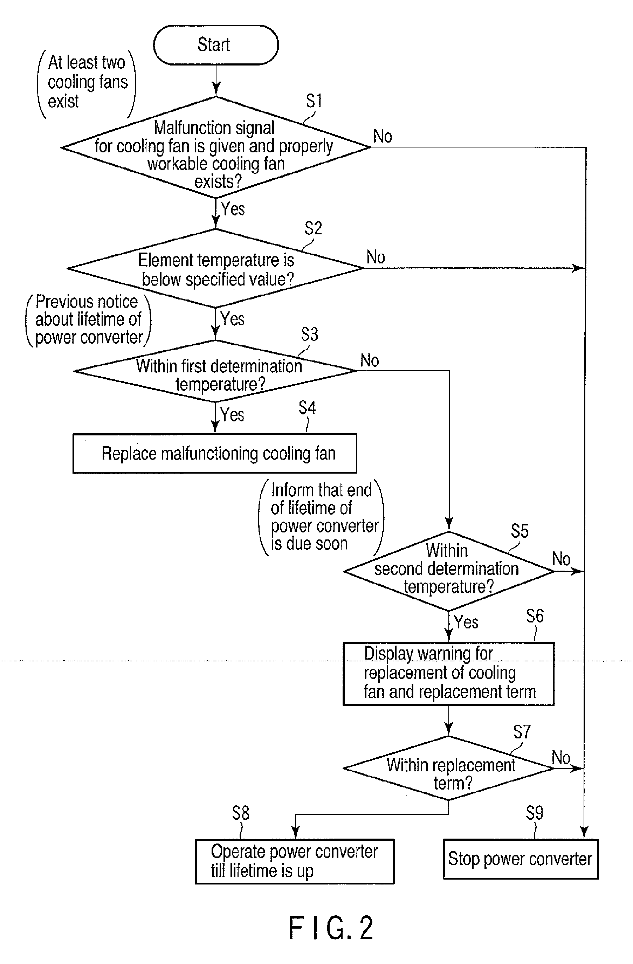

Next, operation of the operation control apparatus 16 of the power conversion apparatus configured as described above will be described with reference to a flowchart of FIG. 2. A malfunction signal is given which is detected by the malfunction detection means as one cooling fan 26 malfunctions. Then, whether a properly workable cooling fan 26 exists or not is determined (S1). If the condition of S1 is determined to be satisfied, whether an element temperature detected by an unshown element-temperature detection means, i.e., a temperature of a semiconductor device forming the inverter 2 exceeds a specified value, e.g., 150 °C or not is determined (S2).

If the detected temperature of the semiconductor device is not determined to exceed the specified value in S2, whether the detected temperature detected by the On-board-temperature detection means 15 is within the first determination temperature (°C) which does not influence componential lifetimes of required setting lifetimes (hr) for the main components provided in the housing 8A or not is determined (S3). If the detected temperature is determined to be within the first determination temperature in S3, a maintenance check instruction to replace a malfunctioning cooling fan 26 is displayed on an unshown display. As a maintenance person sees the instruction, replacement with a reserved cooling fan can be performed (S4).

At the first determination temperature which does not influence the lifetime of the power converter but warrants a previous notice about the lifetime of the power converter, operation of the power converter can be continued by rotation operation of a properly working cooling fan 26 which does not malfunction, without stopping the power converter.

If the condition of S1 is not determined to be satisfied in S1, the operation control apparatus 16 supplies the power converter with an instruction to stop operation (S9). If the condition of S2 is not determined to be satisfied in S2, the operation control apparatus 16 supplies the power converter with an instruction to stop operation (S9).

If the detected temperature detected by the On-board-temperature detection means 15 is not within the first determination temperature in S3, whether the detected temperature is within the second determination temperature, which is a maximum use temperature for each of the main components provided in the housing 8A and is to detect that the end of the lifetime of the power converter is due soon, is determined (S5). If the condition of S5 is satisfied in S5, the operation control apparatus 16 displays a warning for replacement of the cooling fans 26 and a replacement term of the cooling fans 26 on the display of the operation control apparatus 16, wherein the replacement term is, for example, 36 hours since the condition of S5 is satisfied (S6).

When the maintenance person sees the content displayed on the display and then tries to replace a malfunctioning cooling fan 26, whether the aforementioned replacement term expires or not is determined (S7). If the condition of S7 is determined to be satisfied in S7, the malfunctioning cooling fan 26 is replaced and operation of the power converter is continued until the lifetime of the power converter expires. In addition, when the time counted by the relay timer of the operation control apparatus 16 is up, a protection stop instruction is supplied to the power converter.

If the condition of S5 is not determined to be satisfied in S5, the operation control apparatus 16 supplies the power converter with an instruction to stop operation (S9). If the condition of S7 is not determined to be satisfied in S7, the operation control apparatus 16 supplies the power converter with an instruction to stop operation (S9).

If the condition of S2 is unsatisfied in S2 in FIG. 2, necessity for replacement of a cooling fan is displayed on the display of the operation control apparatus. If the condition of S7 is satisfied in S7 in FIG. 2, the display of the operation control apparatus may be made to display that the power converter is forced to stop unless a cooling fan is replaced within a replacement term.

According to the embodiment of the power conversion apparatus as described above, operation can be continued as long as possible by use of a remaining properly working cooling fan even when one of the plurality of cooling fans provided in the housing 8A malfunctions or stops. This means that, if a plurality of cooling fans 26 are thus used, all the cooling fans 26 can simultaneously malfunction only with a low probability. Therefore, the power conversion apparatus can further operate until elapse of a time period required until a maintenance person replaces the cooling fan 26.

Since the first determination temperature described in the foregoing embodiment cannot be found easily, operation of a conventional apparatus until the exact end of a lifetime of each component is difficult. The first determination temperature is difficult to be found even if a power conversion apparatus is practically designed. This is because the margins specified in the design stage differ variously and involve likelihood. Therefore, operation until an exact end of a lifetime of a power converter is possible by using calculated values as in the embodiment and by operating the power converter under calculated temperatures thereof.

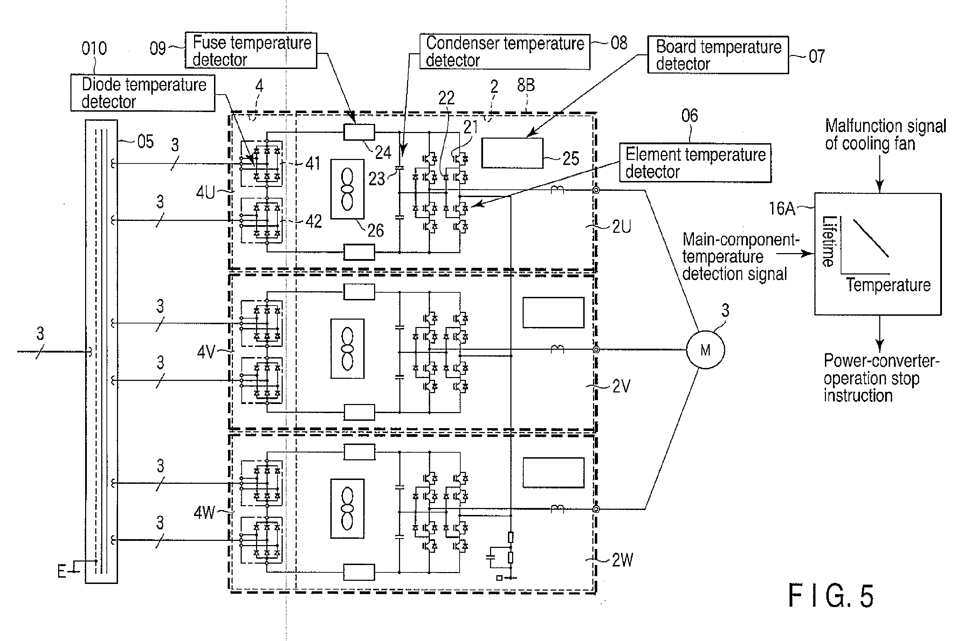

FIG. 5 is a schematic diagram for explaining the second embodiment of a power conversion apparatus, and differs from FIG. 1 in that in place of detected temperatures by the On-board-temperature detection means in the embodiment of FIG. 1, temperatures of respective components forming a power converter including a converter 4 and an inverter 2 are detected inside a housing 8B, and minimum values of the detected temperatures are used.

Specifically, in the housing 8B, there are provided: diode temperature detectors 010 which detect temperatures of diodes forming the converter 4; element temperature detectors 06 which detect temperatures of semiconductor devices forming main circuits of the inverter 2; condenser temperature detectors 08 which detect temperatures of smoothing condensers connected in parallel with the main circuits of the inverter 2; fuse temperature detectors 09 which detect temperatures of fuses 24 connected at contact points between the converter 4 and the inverter 2; and board temperature detectors 07 which detect temperatures of boards 25 where components forming control circuits for controlling the main circuits of the inverter 2 are mounted. Detected values of the temperature detectors are input to an operation control apparatus 16A, and the minimum temperature of the detected temperatures are regarded as detected temperature of a temperature detection means according to the invention.

If a detected temperature detected by the temperature detection means is higher than a first determination temperature for a required setting lifetime for each of the main components provided in the housing 8B and is not higher than a second determination temperature which is a maximum use-limit temperature for each of the main components provided in the housing 8B and if there is a properly working cooling fan among cooling fans 26, the operation control apparatus 16A outputs, to the power converter, an operation instruction so as not to stop but continue operation of the power converter.

Even according to the second embodiment of the power conversion apparatus, the same operation and effects as the first embodiment can be achieved. Specifically, even if a cooling fan 26 malfunctions, operation is continued by a properly working cooling fan insofar as only the first determination temperature is reached. If the second determination temperature is reached, the power converter is operated until elapse of a time period required for replacing the malfunctioning cooling fan. Therefore, operation of the power converter can be continued. Until a maintenance person replaces the cooling fan, operation of the power converter can be continued.

By using fans with shutters as the cooling fans described above, external air can be prevented from entering into the housing 8A or 8B from open parts of a malfunctioning cooling fan. The fans with shutters each include: a wind channel attached at a partition wall partitioning inside and outside of the housing, penetrating the housing; a fan which is attached to the inside of the wind channel and forms a ventilation flow through the wind channel; and an open/close shutter which is provided at an open part outside of the wind channel and which opens/closes the wind channel.

### Industrial Applicability

The foregoing embodiments have been described with reference to an example in which a power converter includes a converter and an inverter. The power converter is not limited to this example but may be configured to be used in a drive system or an uninterruptible power supply.

## Claims

1. A power conversion apparatus, which is contained in a housing and includes a main circuit of a power converter made of a semiconductor device and a control circuit for the power converter, the power conversion apparatus being capable of cooling the power converter to a predetermined temperature by rotation operation of at least two cooling fans in the housing, the power conversion apparatus comprising:
malfunction detection means for detecting a rotation speed of a rotating cooling fan among the cooling fans or a current flowing through a drive circuit of the rotating cooling fan, and outputs a malfunction detection signal when the detected current value becomes lower than a reference value;
temperature detection means for detecting a temperature inside the housing; and
an operation control apparatus which rotates at least one of the cooling fans capable of being operated to rotate, thereby to continue operation of the power converter without stopping the operation of the power converter, when the malfunction detection signal from the malfunction detection means is detected, a temperature of the semiconductor device forming the main circuit is within a specified value, and the detected temperature detected by the temperature detection means becomes higher than a first determination temperature for a required setting lifetime for each of main components provided in the housing.

2. The power conversion apparatus according to claim 1, wherein the at least one of the cooling fans which can be operated to rotate is a cooling fan provided as a reserve in the housing, or a cooling fan provided in the housing after removing a malfunctioning cooling fan.

3. A power conversion apparatus, which is contained in a housing and includes a main circuit of a power converter made of a semiconductor device and a control circuit for the power converter, the power conversion apparatus being capable of cooling the power converter to a predetermined temperature by rotation operation of at least first and second cooling fans in the housing, the power conversion apparatus comprising:
malfunction detection means for detecting a rotation speed of a rotating cooling fan among the cooling fans or a current flowing through a drive circuit of the rotating cooling fan, and outputting a malfunction detection signal when the detected current value becomes lower than a reference value;
temperature detection means for detecting a temperature inside the housing; and
an operation control apparatus which continues operation of the power converter without stopping the operation of the power converter, if the detected temperature detected by the temperature detection means is not higher than a second determination temperature as a maximum use-limit temperature for each of main components provided in the housing and if there is a properly working cooling fan among the cooling fans.

4. A power conversion apparatus, which is contained in a housing and includes a main circuit of a power converter made of a semiconductor device and a control circuit for the power converter, the power conversion apparatus being capable of cooling the power converter to a predetermined temperature by rotation operation of at least first and second cooling fans in the housing, the power conversion apparatus comprising:
malfunction detection means for detecting a rotation speed of an operating cooling fan among the cooling fans or a current flowing through a drive circuit of the operating cooling fan, and outputting a malfunction detection signal when the detected current value becomes lower than a reference value;
temperature detection means for detecting a temperature inside the housing; and
an operation control apparatus which continues operation of the power converter without stopping the operation of the power converter, if the detected temperature detected by the temperature detection means becomes higher than a first determination temperature for a required setting lifetime for each of main components provided in the housing and is not higher than a second determination temperature as a maximum use-limit temperature for each of the main components provided in the housing and if there is a properly working cooling fan among the cooling fans.

5. A power conversion apparatus, which is contained in a housing and includes a diode forming a converter, a semiconductor device forming a main circuit of an inverter, a smoothing condenser connected in parallel with the main circuit of the inverter, a fuse connected at a contact point between the converter and the inverter, and a board where a component forming a control circuit for controlling the main circuit of the inverter is mounted, the power conversion apparatus being capable of cooling a power converter to a predetermined temperature by rotation operation of at least two cooling fans in the housing, the power conversion apparatus comprising:
malfunction detection means for detecting a rotation speed of a rotating cooling fan among the cooling fans or a current flowing through a drive circuit of the rotating cooling fan, and outputting a malfunction detection signal when the detected current value becomes lower than a reference value;
temperature detection means for detecting a minimum temperature of temperatures of the diode, semiconductor device, smoothing condenser, fuse, and board;
an operation control apparatus which rotates at least one rotatable cooling fan among the cooling fans thereby to continue operation of the power converter without stopping the operation of the power converter, when the malfunction detection signal from the malfunction detection means is detected, a temperature of the semiconductor device forming the main circuit is within a specified value, and when the detected temperature detected by the temperature detection means becomes higher than a first determination temperature for a required setting lifetime for each of main components provided in the housing.

6. A power conversion apparatus, which is contained in a housing and includes a diode forming a converter, a semiconductor device forming a main circuit of an inverter, a smoothing condenser connected in parallel with the main circuit of the inverter, a fuse connected at a contact point between the converter and the inverter, and a board where a component forming a control circuit for controlling the main circuit of the inverter is mounted, the power conversion apparatus being capable of cooling a power converter to a predetermined temperature by rotation operation of at least two cooling fans in the housing, the power conversion apparatus comprising:
malfunction detection means for detecting a rotation speed of a rotating cooling fan among the cooling fans or a current flowing through a drive circuit of the rotating cooling fan, and outputting a malfunction detection signal when the detected current value becomes lower than a reference value;
temperature detection means for detecting a minimum temperature of temperatures of the diode, semiconductor device, smoothing condenser, fuse, and board; and
an operation control apparatus which continues operation of the power converter without stopping the operation of the power converter, if the detected temperature detected by the temperature detection means is not higher than a second determination temperature as a maximum use-limit temperature for each of main components provided in the housing and if there is a properly working cooling fan among the cooling fans.

7. A power conversion apparatus, which is contained in a housing and includes a diode forming a converter, a semiconductor device forming a main circuit of an inverter, a smoothing condenser connected in parallel with the main circuit of the inverter, a fuse connected at a contact point between the converter and the inverter, and a board where a component forming a control circuit for controlling the main circuit of the inverter is mounted, the power conversion apparatus being capable of cooling a power converter to a predetermined temperature by rotation operation of at least two cooling fans in the housing, the power conversion apparatus comprising:
malfunction detection means for detecting a rotation speed of an operating cooling fan among the cooling fans or a current flowing through a drive circuit of the operating cooling fan, and outputting a malfunction detection signal when the detected current value becomes lower than a reference value;
temperature detection means for detecting a minimum temperature of temperatures of the diode, semiconductor device, smoothing condenser, fuse, and board; and
an operation control apparatus which continues operation of the power converter without stopping the operation of the power converter, if the detected temperature detected by the temperature detection means becomes higher than a first determination temperature for a required setting lifetime for each of main components provided in the housing and is not higher than a second determination temperature as a maximum use-limit temperature for each of the main components provided in the housing and if there is a properly working cooling fan among the cooling fans.

8. The power conversion apparatus according to any one of claims 1 to 7, wherein fans with shutters are used as the cooling fans, each of the fans with shutters comprising:
a wind channel which is attached to a partition wall partitioning an inside and outside of the housing, penetrating the housing;
a fan attached to the inside of the wind channel and forms a ventilation flow through the wind channel; and
an open/close shutter which is provided at an opening part of the wind channel outside the housing and opens/closes the wind channel.
